# EUROPEAN PATENT SPECIFICATION

(11) **EP 3 841 733 B1**
(45) Date of publication and mention of the grant of the patent: **07.10.2026**
(21) Application number: 19853164.2
(22) Date of filing: 23.08.2019
(51) Int. Cl.: H04L 12/44, H04L 45/00, H04L 45/02, H04L 45/48, H04L 49/1515, H04L 67/55

(54) **FIRST HOP GATEWAY REDUNDANCY IN A NETWORK COMPUTING ENVIRONMENT**
FIRST-HOP-GATEWAY-REDUNDANZ IN EINER NETZWERK-COMPUTING-UMGEBUNG
REDONDANCE DE PASSERELLE DE PREMIER BOND DANS UN ENVIRONNEMENT INFORMATIQUE DE RÉSEAU

(30) Priority: 23.08.2018 US 201862722003 P
(43) Date of publication of application: 30.06.2021
(60) Divisional application: 26169862.5 / 4 787 823
(73) Proprietor: Arrcus Inc., San Jose, CA 95110 (US)
(72) Inventor: MALHOTRA, Neeraj, San Jose, CA 95110 (US); PATEL, Keyur, San Jose, CA 95110 (US); YEUNG, Derek, Man-kit, San Jose, CA 95110 (US); KREEGER, Lawrence, Rolfe, San Jose, CA 95110 (US); SHAH, Shitanshu, San Jose, CA 95110 (US); KUMAR, Lalit, San Jose, CA 95110 (US); RAJARAMAN, Kalyani, San Jose, CA 95110 (US); RAGUKUMAR, Vickram, San Jose, CA 95110 (US); PAI, Nalinaksh, San Jose, CA 95110 (US)
(74) Representative: Betten & Resch
(86) International application number: PCT/US2019/047970
(87) International publication number: WO 2020/041742

(56) References cited:
- US-A1- 2014 044 126
- US-A1- 2015 188 753
- US-A1- 2016 142 313
- US-A1- 2016 142 313
- US-A1- 2016 337 231
- US-A1- 2017 171 057
- US-B1- 7 593 320
- WU ET AL.: "A new multi-channel MAC protocol with on-demand channel assignment for multi-hop mobile ad hoc networks", PROCEEDINGS INTERNATIONAL SYMPOSIUM ON PARALLEL ARCHITECTURES, ALGORITHMS AND NETWORKS, 9 December 2000 (2000-12-09), pages 232 - 237, XP055688768

## Description

### TECHNICAL FIELD

The disclosure relates to computing networks and particularly relates to network topology and routing protocols in a computer networking environment.

### BACKGROUND

US 2017/171057 A1 describes methods for advertising an IP prefix to address the connectivity problem in multi-chassis link aggregation scenario.

Network computing is a means for multiple computers or nodes to work together and communicate with one another over a network. There exist wide area networks (WAN) and local area networks (LAN). Both wide and local area networks allow for interconnectivity between computers. Local area networks are commonly used for smaller, more localized networks that may be used in a home, business, school, and so forth. Wide area networks cover larger areas such as cities and can even allow computers in different nations to connect. Local area networks are typically faster and more secure than wide area networks, but wide area networks enable widespread connectivity. Local area networks are typically owned, controlled, and managed inhouse by the organization where they are deployed, while wide area networks typically require two or more constituent local area networks to be connection over the public Internet or by way of a private connection established by a telecommunications provider.

Local and wide area networks enable computers to be connected to one another and transfer data and other information. For both local and wide area networks, there must be a means to determine a path by which data is passed from one compute instance to another compute instance. This is referred to as routing. Routing is the process of selecting a path for traffic in a network or between or across multiple networks. The routing process usually directs forwarding on the basis of routing tables which maintain a record of the routes to various network destinations. Routing tables may be specified by an administrator, learned by observing network traffic, or built with the assistance of routing protocols.

Small networks may use manually configured routing tables to determine how information should travel from one computer to another computer. A routing table may include a listing of "best paths" indicating the most efficient or most desirable paths between a starting computer and a final destination computer. Larger networks, including networks connected to the public Internet, may rely on complex topologies that can change rapidly such that the manual construction of routing tables is unfeasible. Dynamic routing attempts to solve this problem by constructing routing tables automatically based on information carried by routing protocols. Dynamic routing enables a network to act nearly autonomously in avoiding network failures and blockages. There exist multiple routing protocols that provide rules or instructions for determining best paths between networked device. Examples of dynamic routing protocols and algorithms include Routing Information Protocol (RIP), Open Shortest Path First (OSPF), Enhanced Interior Gateway routing Protocol (EIGRP), and Border Gateway Protocol (BGP).

In some instances, path selection involves applying a routing metric to multiple routes to select or predict the best route. Most routing algorithms use only one network path at a time. Multiple path routing techniques enable the use of multiple alternative paths. In computer networks, a routing algorithm may be used to predict the best path between two compute instances. The routing algorithm may be based on multiple factors such as bandwidth, network delay, hop count, path cost, load, maximum transfer unit, reliability, and communication cost. The routing table stores a listing of the best paths. A topological database may store a list of the best paths and may further store additional information.

In some networks, routing is complicated by the fact that no single entity is responsible for selecting best paths. Instead, multiple entities are involved in selecting best paths or event portions of a single path. In the context of computer networking over the Internet, the Internet is partitioned into autonomous systems (AS) such as Internet Service Providers (ISPs). Each autonomous system controls routes involving its network. Autonomous system-level paths are selected based on the Border Gateway Protocol (BGP). Each autonomous system-level path includes a sequence of autonomous systems through which packets of information flow to travel from one compute instance to another compute instance. Each autonomous system may have multiple paths from which to choose that are offered by neighboring autonomous systems.

There are numerous network topologies that have varying benefits and deficiencies for different computing applications. One network topology is the leaf-spine network topology that includes spine nodes in communication with multiple leaf nodes. Traditional routing protocols for a leaf-spine network topology have numerous deficiencies and can lead to ineffective data loops when a leaf node has gone inactive. There exists a desire for an improved labeling protocol and routing protocol for leaf-spine network topologies.

In light of the foregoing, disclosed herein are systems, methods, and devices for improved routing operations in a network computing environment.

### BRIEF DESCRIPTION OF THE DRAWINGS

Non-limiting and non-exhaustive implementations of the disclosure are described with reference to the following figures, wherein like reference numerals refer to like parts throughout the various views unless otherwise specified. Advantages of the disclosure will become better understood with regard to the following description and accompanying drawings where:
FIG. 1 is a schematic diagram of a system of networked devices communicating over the Internet;
FIG. 2 is a schematic diagram of a network with a first hop gateway redundancy between a first switch and a second switch;
FIG. 3 is a schematic diagram of a network with a first hop gateway redundancy between a first switch and a second switch that is implementing repair path signaling;
FIG. 4 is a schematic diagram of a network with a first hop gateway redundancy between a first switch and a second switch that is implementing a sync of address resolution protocol (ARP) tables;
FIG. 5 is a schematic diagram of a network with a first hop gateway redundancy between a first switch and a second switch illustrating steady state East-West flow;
FIG. 6 is a schematic diagram of a network with a first hop gateway redundancy between a first switch and a second switch illustrating steady state North-South flow;
FIG. 7 is a schematic diagram of a network with a first hop gateway redundancy between a first switch and a second switch illustrating a link failure in the East-West flow;
FIG. 8 is a schematic diagram of a network with a first hop gateway redundancy between a first switch and a second switch illustrating a link failure in the North-South flow;
FIG. 9 is a schematic diagram of a network with a first hop gateway redundancy between a first switch and a second switch illustrating a request for an address resolution protocol (ARP) to an orphan Ethernet segment identifier (ESI) host;
FIG. 10 is a schematic diagram of a network with a first hop gateway redundancy between a first switch and a second switch illustrating a reply from an orphan ESI host with an ARP; and
FIG. 11 is a schematic diagram illustrating components of an example computing device.

### DETAILED DESCRIPTION

Disclosed herein are systems, methods, and devices for improved network topology, routing labeling, and routing protocols in a network computing environment. In accordance with the invention there is provided a system as claimed in claim 1. An embodiment of the disclosure is a network with a first hop gateway redundancy between a first switch and a second switch. In the network, one or more host virtual machines are connected to the first switch and the second switch by way of a virtual interface. The first hop gateway redundancy provides a solution for best path redundancy using a multi chassis bond interface.

In an embodiment, a system includes a network with a first hop gateway redundancy. The system includes a first switch and a second switch in a network topology. The system includes a host virtual machine in communication with at least one of the first switch and the second switch. The system includes a routed peer link connecting the first switch to the second switch. The system is such that the first switch and the second switch have the same Internet protocol (IP) address and media access control (MAC) address.

In a computer network environment, a networking device such as a switch or router may be used to transmit information from one destination to a final destination. In an embodiment, a data package and a message may be generated at a first location such as computer within a person's home. The data package and the message could be generated from the person interacting with a web browser and requesting information from or providing information to a remote server accessible over the Internet. In an example, the data package and the message could be information the person input into a form accessible on a webpage connected to the Internet. The data package and the message may need to be transmitted to the remote server that may be geographically located very far from the person's computer. It is very likely that there is no direct communication between the router at the person's home and the remote server. Therefore, the data package and the message must travel by "hopping" to different networking devices until reaching the final destination at the remote server. The router at the person's home must determine a route for transmitting the data package and the message thru multiple different devices connected to the Internet until the data package and the message reach the final destination at the remote server.

The processes of determining a best bath from a first location to a final destination and forwarding data packages and messages to a next destination are significant functions performed by a networking device such as a switch or router. The connections between networking devices in a network is referred to as the network topology. Network topology is the arrangement of elements such as links and nodes in a communication network. A network topology may include wired links, wireless links, or a combination of wired and wireless links between nodes in the network. Some examples of wired links include coaxial cables, telephone lines, power lines, ribbon cables, optical fibers, and so forth. Some examples of wireless links include satellites, cellular signals, radio signals, free-space optical communication, and so forth. The network topology includes an indication of all nodes in the network (e.g. computers, routers, switches, and other devices) and an indication of the linkages between nodes. Disclosed herein are systems, methods, and devices for improving network topology and network routing.

For purposes of furthering understanding of the disclosure, some explanation will be provided for numerous networking computing devices and protocols.

A BGP instance is a device for routing information in a network. A BGP instance may take the form of a route reflector appliance. The BGP instance may run on a switch, router, or BGP speakers on a switch. At a high level, the BGP instance sends all the paths it has learnt for a prefix to the best path controller. The best path controller responds with a set of best path from amongst those paths. The best path controller is permitted to modify the next-hop and attributes for any of the paths. Once the best paths are received, the BGP instance updates the local Routing Information Base (RIB) and advertises the best path out to its neighbors.

A switch (may alternatively be referred to as a switching hub, bridging hub, or MAC bridge) creates a network. Most internal networks use switches to connect computers, printers, phones, camera, lights, and servers in a building or campus. A switch serves as a controller that enables networked devices to talk to each other efficiently. Switches connect devices on a computer network by using packet switching to receive, process, and forward data to the destination device. A network switch is a multiport network bridge that uses hardware addresses to process and forward data at a data link layer (layer 2) of the Open Systems Interconnection (OSI) model. Some switches can also process data at the network layer (layer 3) by additionally incorporating routing functionality. Such switches are commonly known as layer-3 switches or multilayer switches.

A router connects networks. Switches and routers perform similar functions, but each has its own distinct function to perform on a network. A router is a networking device that forwards data packets between computer networks. Routers perform the traffic directing functions on the Internet. Data sent through the Internet, such as a web page, email, or other form of information, is sent in the form of a data packet. A packet is typically forwarded from one router to another router through the networks that constitute an internetwork (e.g., the Internet) until the packet reaches its destination node. Routers are connected to two or more data lines from different networks. When a data packet comes in on one of the lines, the router reads the network address information in the packet to determine the ultimate destination. Then, using information in the router's routing table or routing policy, the router directs the packet to the next network on its journey. A BGP speaker is a router enabled with the Border Gateway Protocol (BGP).

A customer edge router (CE router) is a router located on the customer premises that provides an interface between the customer's LAN and the provider's core network. CE routers, provider routers, and provider edge routers are components in a multiprotocol label switching architecture. Provider routers are located in the core of the provider's or carrier's network. Provider edge routers sit at the edge of the network. Customer edge routers connect to provider edge routers and provider edge routers connect to other provider edge routers over provider routers.

A routing table or routing information base (RIB) is a data table stored in a router or a networked computer that lists the routes to particular network destinations. In some cases, a routing table includes metrics for the routes such as distance, weight, and so forth. The routing table includes information about the topology of the network immediately around the router on which it is stored. The construction of routing tables is the primary goal of routing protocols. Static routes are entries made in a routing table by non-automatic means and which are fixed rather than being the result of some network topology discovery procedure. A routing table may include at least three information fields, including a field for network ID, metric, and next hop. The network ID is the destination subnet. The metric is the routing metric of the path through which the packet is to be sent. The route will go in the direction of the gateway with the lowest metric. The next hop is the address of the next station to which the packet is to be sent on the way to its final destination. The routing table may further include quality of service associate with the route, links to filtering criteria lists associated with the route, interface for an Ethernet card, and so forth.

For purposes of illustrating the concept of a routing table, the routing table may be analogized to using a map for delivering a package. A routing table is similar to the use of a map for delivering a package to its final destination. When a node needs to send data to another node on a network, the node must first know where to send the data. If the node cannot directly connect to the destination node, the node must send the data to other nodes along a proper route to the destination node. Most nodes do not try to figure out which routes might work. Instead, a node will send an IP packet to a gateway in the LAN, which then decides how to route the data to the correct destination. Each gateway will need to keep track of which way to deliver various packages of data, and for this it uses a routing table. A routing table is a database that keeps track of paths, like a map, and uses these paths to determine which way to forward traffic. Gateways can also share the contents of their routing table with other nodes requesting the information.

For hop-by-hop routing, each routing table lists, for all reachable destinations, the address of the next device along the path to that destination, *i.e.* the next hop. Assuming the routing tables are consistent, the algorithm of relaying packets to their destination's next hop thus suffices to deliver data anywhere in a network. Hop-by-hop is a characteristic of an IP Internetwork Layer and the Open Systems Interconnection (OSI) model.

The Open Systems Interconnection (OSI) model is a conceptual model that characterizes and standardizes the communication functions of a computing system without regard to its underlying internal structure and technology. The goal of the OSI model is the interoperability of diverse communication systems with standard communication protocols. The OSI model partitions a communication system into abstraction layers. A layer serves the layer above it and is served by the layer below. For example, a layer that provides error-free communications across a network provides the path needed by applications above it, while it calls the next lower layer to send and receive packets that constitute the contents of that path. Two instances at the same layer are visualized as connected by a horizontal connection in that layer. Communication protocols enable an entity in one host to interact with a corresponding entity at the same layer in another host. Service definitions, like the OSI model, abstractly describe the functionality provided to an (N)-layer by an (N-1)-layer, wherein N is one of the layers of protocols operating in the local host.

Route control is a type of network management that aims to improve Internet connectivity and reduce bandwidth cost and overall internetwork operations. Some route control services include a suite of hardware-based and software-based products and services that work together to improve overall Internet performance and finetune the use of available Internet bandwidth at minimal cost. Route control can be successful in scenarios where a network or autonomous system is sourcing Internet bandwidth from multiple providers. Route control can aid in the selection of the most optimal path for data transmission.

Some network communication systems are large, enterprise-level networks with thousands of processing nodes. The thousands of processing nodes share bandwidth from multiple Internet Service Providers (ISPs) and can process significant Internet traffic. Such systems can be extremely complex and must be properly configured to result in acceptable Internet performance. If the systems are not properly configured for optimal data transmission, the speed of Internet access can decrease, and the system can experience high bandwidth consumption and traffic. To counteract this problem, a set of services may be implemented to remove or reduce these concerns. This set of services may be referred to as routing control.

An embodiment of a routing control mechanism is composed of hardware and software. The routing control mechanism monitors all outgoing traffic through its connection with an Internet Service Provider (ISP). The routing control mechanism aids in selecting the best path for efficient transmission of data. The routing control mechanism may calculate the performance and efficiency of all ISPs and select only those ISPs that have performed optimally in applicable areas. Route control devices can be configured according to defined parameters pertaining to cost, performance, and bandwidth.

A known algorithm for determining the best path for the transmission of data is referred to as the Border Gateway Protocol (BGP). BGP is a path-vector protocol that provides routing information for autonomous systems on the Internet. When BGP is configured incorrectly, it can cause sever availability and security issues. Further, modified BGP route information can permit attackers to redirect large blocks of traffic so the traffic travels to certain routers before reaching its intended destination. The BGP best path algorithm can be implemented to determine the best path to install in an Internet Protocol (IP) routing table for traffic forwarding. BGP routers may be configured to receive multiple paths to the same destination.

The BGP best path algorithm assigns a first valid path as the current best path. The BGP best path algorithm compares the best path with the next path in the list until the BGP reaches the end of the list of valid paths. The list provides the rules that are used to determine the best path. For example, the list may include an indication that the path with the highest weight is preferred, the path without a local preference is preferred, the path that was locally originated by way of a network or aggregate BGP is preferred, a shortest path is preferred, a path with the lowest multi-exit discriminator is preferred, and so forth. The BGP best path selection process can be customized.

In the context of BGP routing, each routing domain is known as an autonomous system (AS). BGP assists in selecting a path through the Internet to connect two routing domains. BGP typically selects a route that traverses the least number of autonomous systems, referred to as the shortest AS path. In an embodiment, once BGP is enabled, a router will pull a list of Internet routes from BGP neighbors which may be ISPs. BGP will then scrutinize the list to find routes with the shortest AS paths. These routes may be entered in the router's routing table. Generally, a router will choose the shortest path to an AS. BGP uses path attributes to determine how to route traffic to specific networks.

Equal cost multipath (ECMP) routing is a routing strategy where next-hop packet forwarding to a single destination can occur over multiple "best paths." The multiple best paths are equivalent based on routing metric calculations. Multiple path routing can be used in conjunction with many routing protocols because routing is a per-hop decision limited to a single router. Multiple path routing can substantially increase bandwidth by load-balancing traffic over multiple paths. However, there are numerous issues known with ECMP routing when the strategy is deployed in practice. Disclosed herein are systems, methods, and devices for improved ECMP routing.

A Clos network can be deployed in telecommunications. A Clos network is a multistage circuit-switching network that represents an idealization of multistage switching systems. A Clos network includes three stages, including the ingress stage, the middle stage, and the egress stage. Each stage is made up of a number of crossbar switches. Each cell enters an ingress crossbar switch that can be routed through any of the available middle stage crossbar switches to the relevant egress crossbar switch. A middle stage crossbar is available for a particular new call if both the link connecting the ingress switch to the middle stage switch, and the link connecting the middle stage switch to the egress switch, are free.

A leaf-spine network topology can be deployed for connecting nodes in a computer network. The leaf-spine topology has two layers, including the leaf layer and the spine layer. The leaf layer consists of access switches that connect to devices like servers, firewalls, load balancers, and edge routers. The spine layer is made up of switches that perform routing and forms the backbone of the network where every leaf switch is interconnected with each spine switch. In a leaf-spine topology, all devices are located the same number of links away from each other and include a predictable and consistent amount of delay or latency for transmitting information.

A virtual local area network (VLAN) is a broadcast domain that is partitioned and isolated in a computer network at the data link layer. A VLAN may apply tags to network frames and handle those tags in networking systems to create the appearance and functionality of network traffic that is physically on a single network but acts as if it is split between separate networks. VLANs can keep network applications separate despite being connected to the same physical network, and without requiring multiple sets of cabling and networking devices to be deployed.

A switched virtual interface (SVI) is a virtual interface and port that transmits untagged-VLAN packets for a managed switch. Traditionally, switches send traffic only to hosts within the same broadcast domain (single VLAN) and routers handle traffic between different broadcast domains (different VLANs). In such an implementation, network devices in different broadcast domains cannot communicate without a router. When an SVI is implemented, a switch may use a virtual Layer3 interface to route traffic to other Layer3 interfaces. This eliminates the need for a physical router. VLANs reduce the load on a network by dividing a LAN into smaller segments and keeping local traffic within a VLAN. However, because each VLAN has its own domain, there is a need for a mechanism for VLANs to pass data to other VLANs without passing the data through a router. The SVI is such a mechanism. An SVI is normally found on switches (for example, Layer3 and Layer2 switches). When an SVI is implemented, a switch can recognize packet destinations that are local to the sending VLAN and can switch those packets destined for different VLANs. In an embodiment, there is one-to-one mapping between a VLAN and an SVI. In such an embodiment, only a single SVI can be mapped to a VLAN.

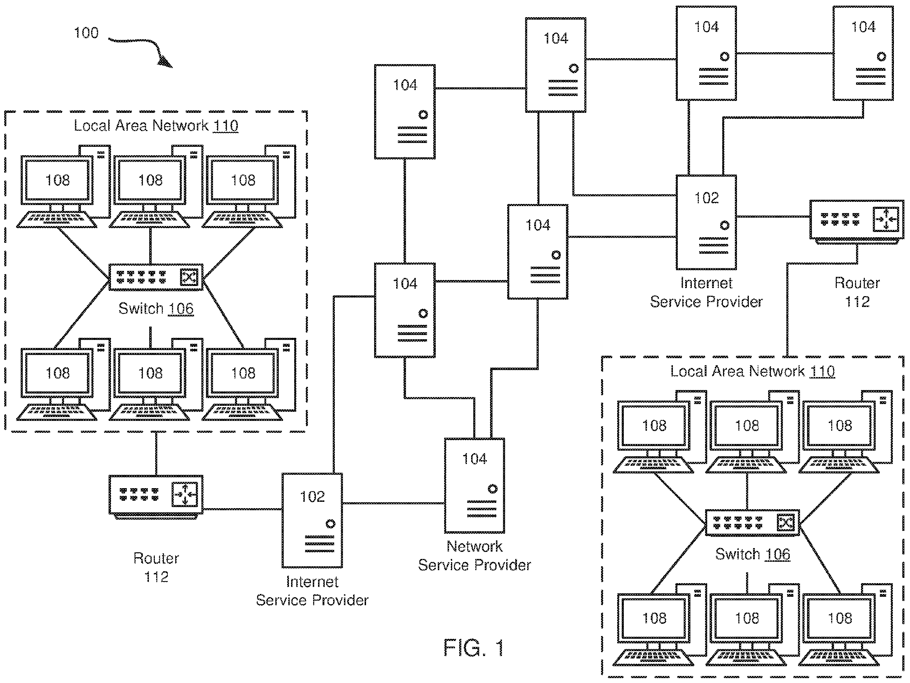

Referring now to the figures, FIG. 1 illustrates a schematic diagram of a system 100 for connecting devices to the Internet. The system 100 includes multiple local area network 160 connected by a switch 106. Each of the multiple local area networks 160 can be connected to each other over the public Internet by way of a router 162. In the example system 100 illustrated in FIG. 1, there are two local area networks 160. However, it should be appreciated that there may be many local area networks 160 connected to one another over the public Internet. Each local area network 160 includes multiple computing devices 108 connected to each other by way of a switch 106. The multiple computing devices 108 may include, for example, desktop computers, laptops, printers, servers, and so forth. The local area network 160 can communicate with other networks over the public Internet by way of a router 162. The router 162 connects multiple networks to each other. The router 162 is connected to an internet service provider 102. The internet service provider 102 is connected to one or more network service providers 104. The network service providers 104 are in communication with other local network service providers 104 as shown in FIG. 1.

The switch 106 connects devices in the local area network 160 by using packet switching to receive, process, and forward data to a destination device. The switch 106 can be configured to, for example, receive data from a computer that is destined for a printer. The switch 106 can receive the data, process the data, and send the data to the printer. The switch 106 may be a layer-1 switch, a layer-2 switch, a layer-3 switch, a layer-4 switch, a layer-7 switch, and so forth. A layer-1 network device transfers data but does not manage any of the traffic coming through it. An example of a layer-1 network device is an Ethernet hub. A layer-2 network device is a multiport device that uses hardware addresses to process and forward data at the data link layer (layer 2). A layer-3 switch can perform some or all of the functions normally performed by a router. However, some network switches are limited to supporting a single type of physical network, typically Ethernet, whereas a router may support different kinds of physical networks on different ports.

The router 162 is a networking device that forwards data packets between computer networks. In the example system 100 shown in FIG. 1, the routers 162 are forwarding data packets between local area networks 160. However, the router 162 is not necessarily applied to forwarding data packets between local area networks 160 and may be used for forwarding data packets between wide area networks and so forth. The router 162 performs traffic direction functions on the Internet. The router 162 may have interfaces for different types of physical layer connections, such as copper cables, fiber optic, or wireless transmission. The router 162 can support different network layer transmission standards. Each network interface is used to enable data packets to be forwarded from one transmission system to another. Routers 162 may also be used to connect two or more logical groups of computer devices known as subnets, each with a different network prefix. The router 162 can provide connectivity within an enterprise, between enterprises and the Internet, or between internet service providers' networks as shown in FIG. 1. Some routers 162 are configured to interconnecting various internet service providers or may be used in large enterprise networks. Smaller routers 162 typically provide connectivity for home and office networks to the Internet. The router 162 shown in FIG. 1 may represent any suitable router for network transmissions such as an edge router, subscriber edge router, inter-provider border router, core router, internet backbone, port forwarding, voice/data/fax/video processing routers, and so forth.

The internet service provider (ISP) 102 is an organization that provides services for accessing, using, or participating in the Internet. The ISP 102 may be organized in various forms, such as commercial, community-owned, non-profit, or privately owned. Internet services typically provided by ISPs 102 include Internet access, Internet transit, domain name registration, web hosting, Usenet service, and colocation. The ISPs 102 shown in FIG. 1 may represent any suitable ISPs such as hosting ISPs, transit ISPs, virtual ISPs, free ISPs, wireless ISPs, and so forth.

The network service provider (NSP) 104 is an organization that provides bandwidth or network access by providing direct Internet backbone access to Internet service providers. Network service providers may provide access to network access points (NAPs). Network service providers 104 are sometimes referred to as backbone providers or Internet providers. Network service providers 104 may include telecommunication companies, data carriers, wireless communication providers, Internet service providers, and cable television operators offering high-speed Internet access. Network service providers 104 can also include information technology companies.

It should be appreciated that the system 100 illustrated in FIG. 1 is exemplary only and that many different configurations and systems may be created for transmitting data between networks and computing devices. Because there is a great deal of customizability in network formation, there is a desire to create greater customizability in determining the best path for transmitting data between computers or between networks. In light of the foregoing, disclosed herein are systems, methods, and devices for offloading best path computations to an external device to enable greater customizability in determining a best path algorithm that is well suited to a certain grouping of computers or a certain enterprise.

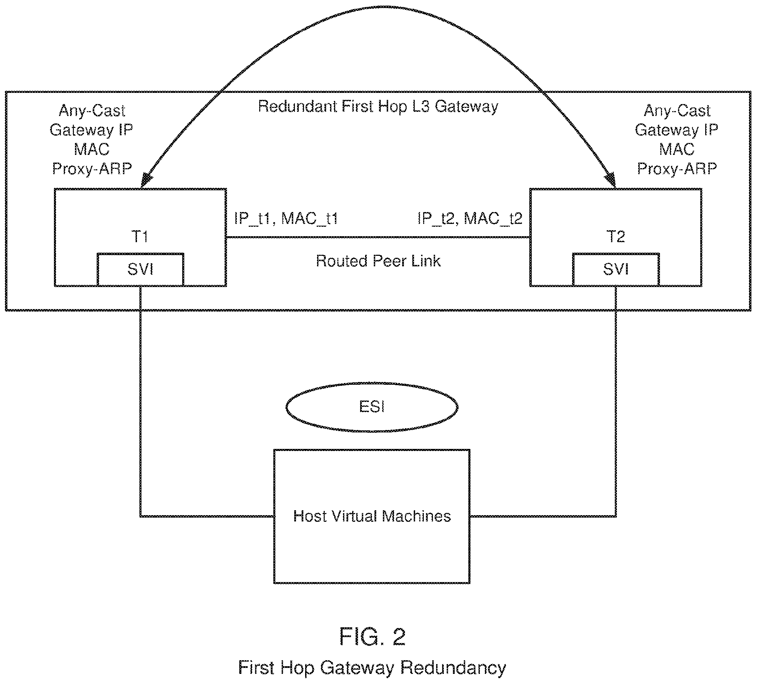

FIGS. 2-10 illustrate embodiments of a network for implementing a first hop gateway redundancy. In an embodiment, the host virtual machines are connected to switches. The switches are depicted as T1 and T2 in FIGS. 2-10. The embodiments in FIGS. 2-10 are illustrative of a means for building a best path redundancy using a multi chassis bond interface.

The topology of the embodiments of FIGS. 2-10 includes an interface spread across the host virtual machines to the switches T1 and T2. This interface is part of the same bond interface on the host virtual machines. The links terminate to a virtual local area network (VLAN) on each of the switches T1 and T2. The embodiments may be deployed in a Layer3 routing interface that serves as the first hop gateway. In such an embodiment, if a host virtual machine needs to reach another host virtual machine, a communication may be facilitated by one or more of the switches T1 and T2. The switches T1 and T2 together act as a virtual first hop gateway for the host virtual machines. The switches T1 and T2 are configured with the same gateway IP address and the same gateway MAC address from the point of view of a host virtual machine. Therefore, from the point of view of a host virtual machine, the host virtual machine is talking to a single gateway IP rather than two gateway IPs located on two different switches T1 and T2.

Redundancy is achieved by configuring the same IP and MAC addresses on the switches T1 and T2. Further, a routed peer link that includes the IP and MAC addresses is configured between the switches T1 and T2.

The switches T1 and T2 may signal to one another by way of Border Gateway Protocol (BGP) signaling. In an embodiment, T1 and T2 each signal their end of a repair path for handling link failures.

In an embodiment, there is a repair path for handling link failure. For example, the link between the switch T1 and a host virtual machine fails. There is a need to enable T2 to use a repair path to redirect traffic coming from the host virtual machine. This enables reachability to the Ethernet segment identifier (ESI) by way of the routed peer link. T2 may receive a BGP message from TI indicating that T1 has reachability to ESI by way of the next hop thru T1. Any host virtual machine that T1 learns by way of the bond will install as an anchor path for the directly connected host virtual machine. In the case of a link failure, an automated repair path is activated to send traffic through the switch T2.

In an embodiment, an ARP SYNC is performed for switch T1 to route a packet to the host virtual machine. The ARP SYNC includes syncing ARP tables within T1 and T2. If T1 learns a change from the host virtual machine, T1 may use BGP EVPN signaling to sync with T2. BGP signaling may be automatically transmitted when there is a change. When switch T1 learns ARP binding on host H1 on a local area SVI interface, T1 may generate a BGP EVPN route type 2 message to T2 that carries the IP and site on which the IP is learned.

In an embodiment, an ARP reply is generated from an orphan ESI host. The ARP reply may be performed using messaging between switches T1 and T2 to send an ARP request. The ARP replay may be send back using BGP EVPN route type 2 messaging between the switches T1 and T2.

In an embodiment, a link between a switch TI, T2 and a host virtual machine or virtual consumer electronics device may fail. If the link fails, the path may be removed from forwarding. The switch with the failed link may automatically remove the fault path. The switch may have learned all routes and aggregated the routes to a routed overlay protocol, and the faulty path may then be withdrawn from those routes so that any traffic destined would no longer be sent by way of the failed link.

FIG. 2 is a schematic diagram of a network with a first hop gateway redundancy. The network includes T1 and T2 representing networking devices such as a switch or router. Each of T1 and T2 includes a switch virtual interface (SVI). There is a routed peer link between T1 and T2. Each of TI and T2 includes an anycast gateway IP, an anycast MAC, and an anycast proxy- ARP. T1 advertises a local peer link IP referred to as IP _t1. T2 advertises a local peer link IP referred to as IP_t2. T1 advertises a media access control (MAC) address referred to as MAC_t1. T2 advertises a MAC address referred to as MAC_t2. T1 and T2 communicate with host virtual machines by way of the SVI connection.

The network is configured such that T1 and T2 serve as redundant anycast centralized gateways. T1 and T2 are gateways for hosts that are multi-homed by way of an L2 LAG bundle. T1 and T2 are configured with an SVI and any anycast gateway MAC along with an anycast gateway IP for North-South routing. T1 and T2 are configured with a common ethernet virtual private network (EVPN) ethernet segment identifier (ESI) representing the link aggregation (LAG) main port. T1 and T2 are configured with an EVPN instance per-VLAN with media access control- virtual routing and forwarding route targets (MAC-VRF RTs). The MAC-VRF RTs may be automatically derived or manually configured. T1 and T2 are configured with a Layer3 enable peer link to be used for protection. In an embodiment, a BGP-EVPN session is set up between T1 and T2 to advertise local peer link IP (may be referred to as IP_t1 and IP _t2) as the next hops.

In the network, there is a BGP-EVPN control plane to signal a repair path by way of RT-1. The BGP-EVPN control plane further signals an ARP SYNC by way of RT-2 and an ARP request by way of RT-2.

In a datacenter network, a first hop gateway redundancy may be provided using an ethernet virtual private network and RT-1 based protection signaling. In this configuration, an L3 routed network north of T1/T2 is assumed. In this instance, there is only L2 connectivity on access and IP unicast traffic. In an implementation, only L2 connectivity is allowed access.

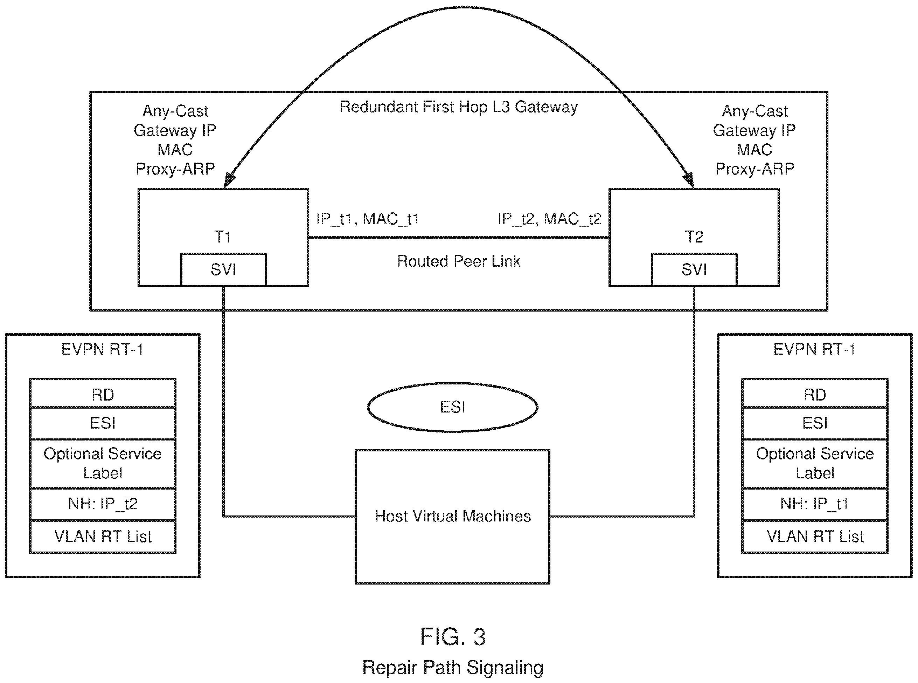

FIG. 3 illustrates a network that provides repair path signaling by way of an EVPN RT- 1. In the network, T1 and T2 peers exchange per-ESI RT-1 (Ethernet AD route) with IP_tl and IP_t2 next hops. This signals local ESI connectivity across redundancy group peers. Further, per- ESI RT-1 is advertised with EVI-RTs for VLANs configured on an ESI main port to be used for import into MAC-VRF. This per-ESI RT-1 is leveraged to signal a Layer3 repair path to all directly connected hosts on a given ESI by way of the redundancy group peer.

In an embodiment, the RT-1 is required for repair path signaling as an RT-2 may not always be generated by both T1 and T2 depending on where the ARP is learnt. In such an embodiment, an ESI that does not have a repair path signaled from any peer would be considered and handled as an orphan ESI.

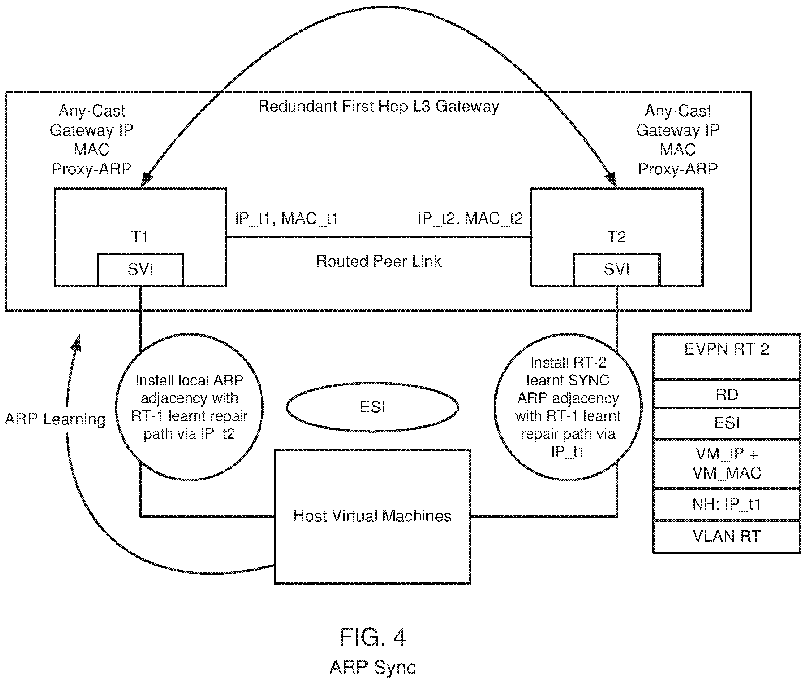

FIG. 4 is a schematic diagram of a network that provides a host adjacency sync and repair path programming. The network may learn local (for example, MAC+IP and/or SVI) from a local ARP cache. This is given EVPN context derived from the SVI to the VLAN. The network may learn local (MAC to AC) by way of an HW MAC learning update within a given EVPN context derived from the MAC source. The network may further perform a local MAC+IP resolution by way of a local MAC to derive a port and/or ESI for an ARP learnt MAC+IP. Once resolved, the network may advertise EVPN MAC+IP RT-2 for the purpose of MAC+IP sync across redundancy group peers, for example from T1 to T2.

The network may refer to T2 to import the MAC+IP RT-2 into MAC-VRF by way of EVI-RT mapping. The network may resolve the MAC+IP RT-2 from T1 by way of a per-ESI RT- 1 from T1 and a lookup local ESI DB to check for local connectivity to ESI for the received MAC+IP. If the received ESI is local and up, the network may install a static ARP entry for the received IP on a local VLAN SVI interface if it is not dynamically learnt. The FIB may be accessed to install the ARP learnt adjacency route with protection by way of an RT-1 learnt next hop for the corresponding ESI.

All host adjacencies learnt on a local ESI (dynamic or SYNCed) are installed with protection by way of an RT-1 learnt repair path for that ESI.

The network may provide for T2 ESI failure handling. In the case of a failure, the network may active a repair path by way of a redundant peer.

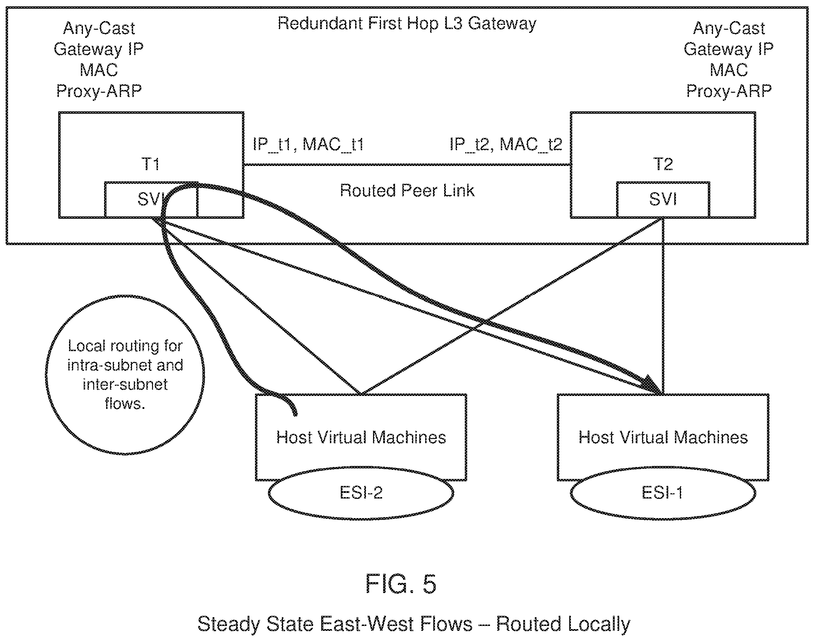

FIG. 5 is a schematic diagram of a network with steady state East-West flows that are routed locally. The network includes host virtual machines with the Ethernet segment identifier (ESI). One grouping of host virtual machines is associated with ESI-2 and the other group is associated with ESI-1. The steady state East-West flow includes local routing for both intra-subnet and inter-subnet flows. As shown in FIG. 5, there is steady state flow from the host virtual machines storing ESI-2 to the host virtual machines storing ESI-1. There is communication between the host virtual machines and each of T1 and T2.

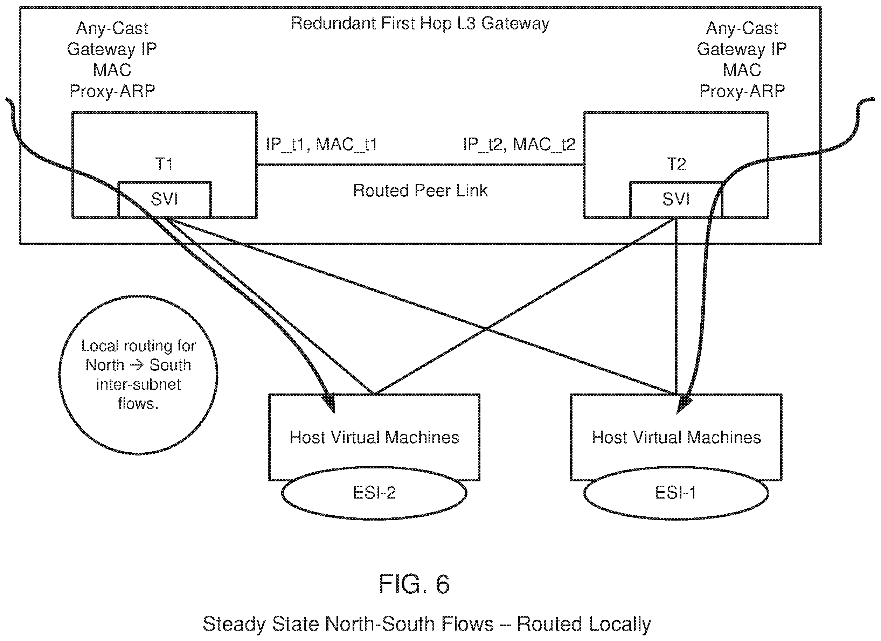

The network may provide for East-West intra-subnet flows to avoid any L2 flooding or bridging of East-West traffic flows. This may be accomplished with a proxy ARP mechanism. The ARP mechanism may transmit broadcast ARP requests received from access-facing hosts that are bridged to the local SVI interface. In an embodiment, the ARP requests are not flooded on other L2 ports in the VLAN. In such an embodiment, ARP requests received on the SVI interface are proxy replied to with the anycast gateway MAC. Similarly, ARP requests originating on the gateway are flooded on the local ESI and local orphan ESI ports and never flooded to the peer gateway. The SVI interface may be, accordingly, configured with proxy-ARP and proxy-ND for complete hosts to which reachability has been established with a local ARP/ND entry or by way of remote MAC+IP RT-2. In such an embodiment, any East-West, including intra-subnet flows may be L2 terminated on the gateway and routed to the destination adjacency. This may be performed similar to North-South flow illustrated in FIG. 6.

FIG. 6 is a schematic diagram of a network with steady state North-South flows that are routed locally. The steady state North-South flow includes local routing for North to South inter-subnet flows. As shown in FIG. 6, there is steady state flow from T1 to the host virtual machines storing ESI-2 and from T2 to the host virtual machines storing ESI-1. FIG. 6 illustrates steady state North-South traffic flow to a multi-homed host. Traffic destined to the host IP, received at the TOR is routed directly to the host.

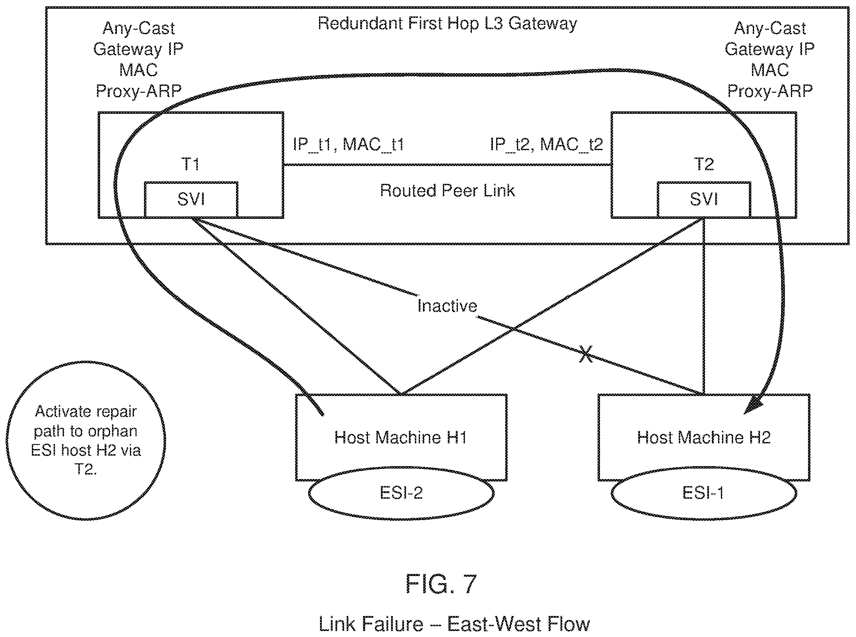

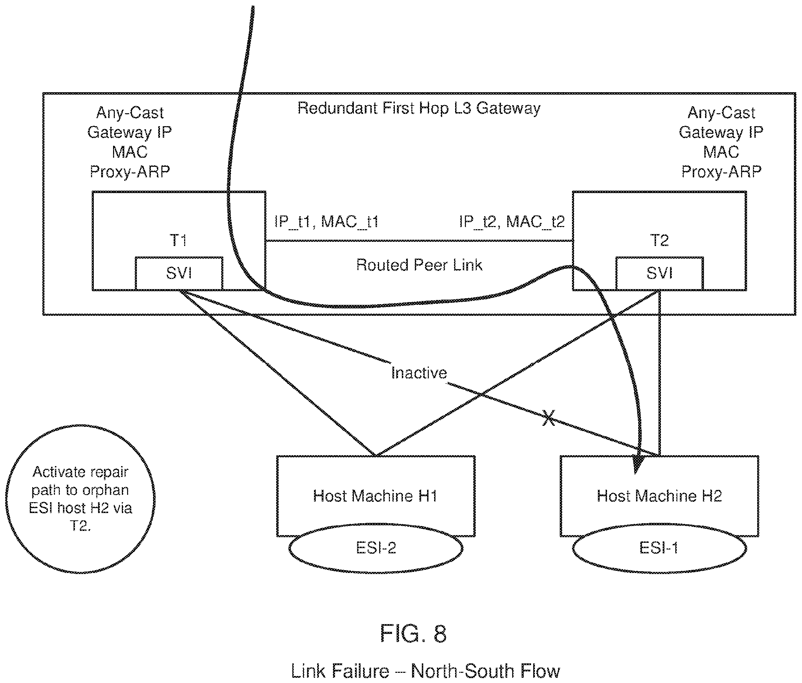

FIG. 7 is a schematic diagram of a network with a link failure in the East-West flow. The link from T1 to the host machine H2 is inactive and has failed. All traffic routed to hosts on the failed ESI via subnet route may be rerouted by way of the peer routed peer link. Further, the network may withdraw local per-ESI RT-1 (a mass withdraw) while routed traffic flows continue to be routed by way of the subnet route in a load balanced manner across T1 and T2. In this manner, flows arriving at T2 are rerouted by way of the routed peer link to T1. This routes the flows directly to a connected host on the now orphan ESI (illustrated in FIG. 8).

FIG. 8 illustrates a schematic diagram of a network with a link failure in the North-South flow. The network activates a repair path to the orphan ESI host on H2 by way of the routed peer link to T2. The link from T1 to the host machine H2 is inactive and has failed. As illustrated in the steady state North-South flows illustrated in FIG. 6, flows are typically routed from T1 and/or T2 directly to the corresponding host virtual machine grouping. When the link from T1 to host machine H2 has failed, flows can be routed from T1 to T2 by way of the routed peer link. The flow can then be routed to the appropriate host machine H2.

Further, the flows arriving at T2 can be rerouted by way of the routed peer link to T1 which will route the flows directly to the connected host on the now orphan ESI as illustrated in FIG. 8. The network may provide for T1 "orphan ESI" handling. The network may, for each ESI RT-1, commit a mass withdraw from T2. This can cause local ESI to move to the "orphan" state. The network may reprogram forwarding to remove repair path programming on mass withdraw from the peer.

The network may RT-1 mass withdraw from Tl. This can cause the MAC+IP RT-2 path from Tl to be unresolved. In response, the network may remove statically sourced SYNCARP if present as a result of MAC+IP RT-2 from Tl and inject host routes into the default routing control plane for all host adjacencies (i.e., ARP entries) learnt on an orphan ESI. Once injected, the more specific routes will allow flows destined to hosts on an orphan port to converge to the direct path to Tl.

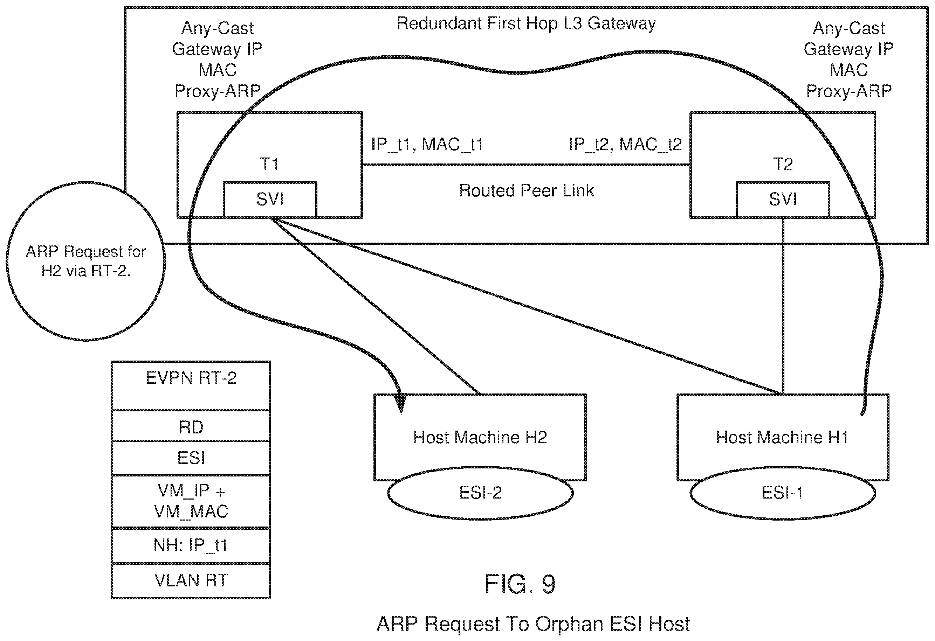

FIG. 9 is a schematic diagram of a network performing an ARP request to an orphan ESI host. The network may perform an "ARPing" of an orphan ESI host wherein ARP is an address resolution protocol. For example, to maintain both East-West and North-south reachability to hosts on a Tl orphan ESI by way of T2, T2 must be able to ARP a host on a Tl orphan ESI. In the absence of a Layer2 extension between Tl and T2, an alternate mechanism is required to ARP orphan hosts on the peer gateway.

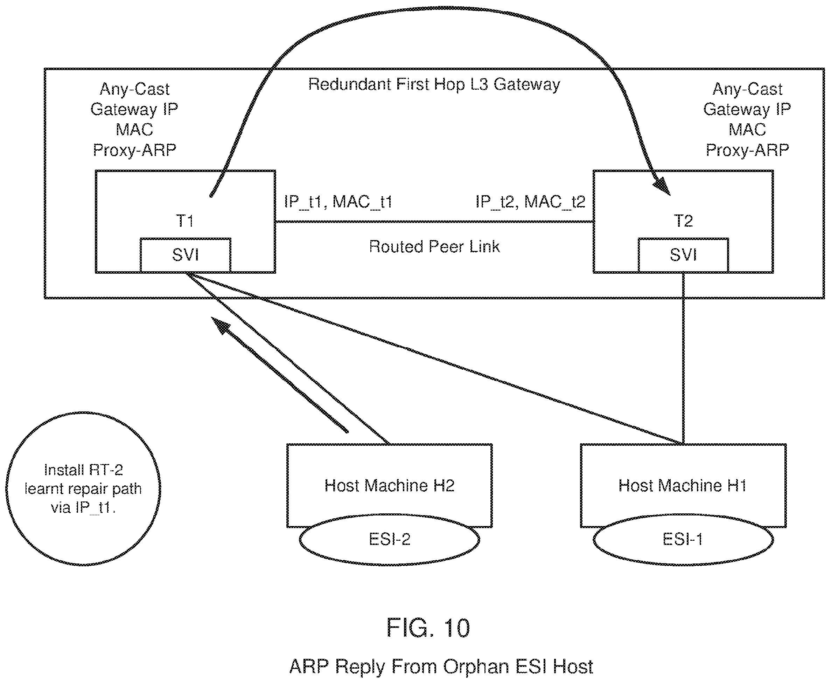

The network shown in FIG. 9 resolves the orphan ESI. The network may overload BGP RT-2 to send ARP request to the peer gateway as shown in FIG. 9. In this manner, T2 receives an ARP request to host IP1 on SVI or needs to ARP host IP1 because of glean. T2 may send an ARP request by way of MAC+IP RT-2 to Tl. In response, Tl generates an ARP request on the local ESI and local orphan ESI ports. Tl learns an ARP entry for the local host IP1 and generates a MAC+IP1 RT-2. T2 can install reachability to IP1 over the routed peer link as illustrated in FIG. 9 to reply to the orphan ESI host (illustrated in FIG. 10).

In an embodiment of any of the networks illustrated in FIGS. 2-10, virtual routing and forwarding (VRF) support may be provided. To facilitate VRF, a network using [VRF, ESI] RT-1 and ESI RT-1 learns a repair path. This is performed with an L3-VPN label attribute. In the absence of an overlay, a repair path may be sent over a directly connected peer link with a per- VRF MPLS VPN encapsulation as follows: [VRF, IP/32] to adjacency to [IP/32, SVI] to [MAC, ESI-port] (primary path); or [VRF, IP/32] to adjacency to [IP_tl, P] to MAC_tl+VPN label (backup path)

Alternatively, layer-3 VLAN tagged sub-interfaces may be used as peer links in place of a VPN label to achieve repair path forwarding in a multi-tenant environment.

In an embodiment, an alternative for overlay VPN support and peer link is provided. In an example, after a VXLAN overlay is enabled, a directly connected peer link may no longer be required. In the absence of a peer link, a VPN overlay stretches across the redundancy group. To that end, an L3-VNEVSLAN encapsulated repair path advertised via per-[VRF, ESI] EAD RT- 1 may replace the directly connected peer link repair path.

In an example, with a steady state on T2, the encapsulation may be implemented as follows:
[VRF, IP/32] to adjacency to [IP/32, SVI] to [MAC, ESI-port] (primary path); or
[VRF, IP/32] to L3-VNI+VXLAN tunnel path to VTEP-T1 (backup path).

In the case of a post-ESI failure on T2, traffic is routed on the overlay repair path as follows:
[VRF, IP/32] to L3-VNI+VXLAN tunnel path to VTEP-T1

However, if the subnet is stretched beyond the redundancy group, reachability from remote leaf nodes may be established by way of the tunnel path, similar to above:
[VRF, IP/32] to L3-VNI+VXLAN tunnel path to VTEP-T1.

Glean handling may be similar to handling for orphan ESI hosts as disclosed above. However, the network may advertise MAC+IP RT-2 with MAC as all ones within the stretched EVI to trigger local ARP from all ToRs participating in the EVI.

According to the claimed invention, there is provided a system comprising: a first switch in a network topology; a second switch in the network topology; a host virtual machine having a communication link with each of the first switch and the second switch; and a routed peer link connecting the first switch to the second switch; wherein the first switch and the second switch have the same Internet protocol, IP, address and media access control, MAC, address such that a single virtual interface including the gateway IP address and the gateway MAC address is spread across both the first switch and the second switch;wherein the first switch further has a first IP address and a first MAC address and the second switch further has a second IP address and a second MAC address, the first IP address being different from the second IP address and the first MAC address being different from the second MAC address; and wherein the first switch and the second switch are configured to signal, to the host virtual machine, a repair path including the first IP address and the second IP address for redirecting traffic when the communication link between the host virtual machine and either of the first switch or the second switch experiences a failure, the repair path including the routed peer link connecting the first switch to the second switch.

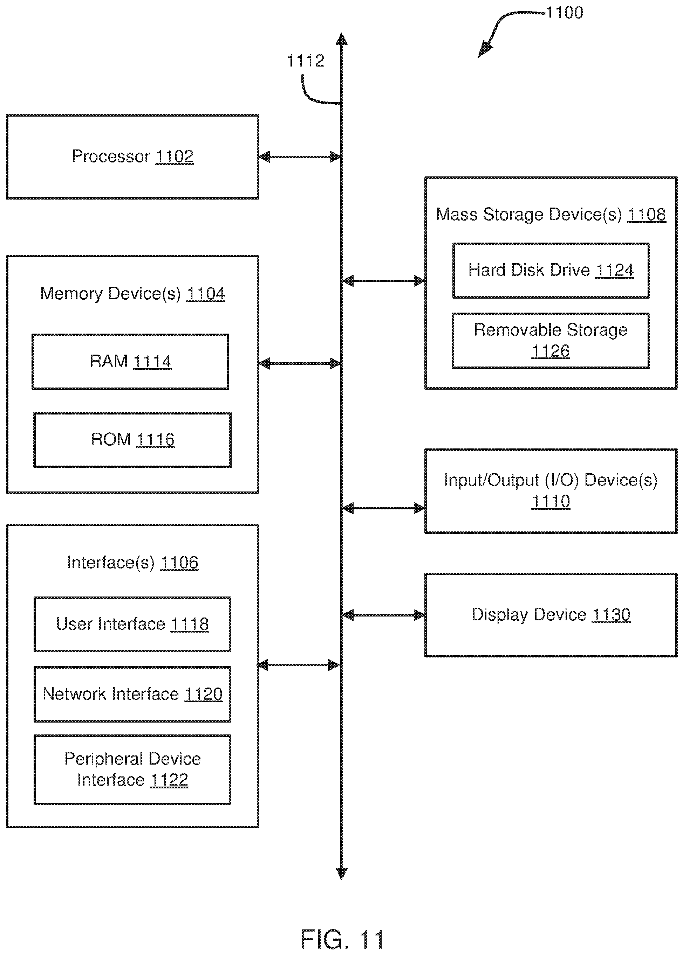

Referring now to FIG. 11, a block diagram of an example computing device 1100 is illustrated. Computing device 1100 may be used to perform various procedures, such as those discussed herein. In one embodiment, the computing device 1100 can function to perform the functions of the asynchronous object manager and can execute one or more application programs. Computing device 1100 can be any of a wide variety of computing devices, such as a desktop computer, in-dash computer, vehicle control system, a notebook computer, a server computer, a handheld computer, tablet computer and the like.

Computing device 1100 includes one or more processor(s) 1102, one or more memory device(s) 1104, one or more interface(s) 1106, one or more mass storage device(s) 1108, one or more Input/output (I/O) device(s) 1102, and a display device 1130 all of which are coupled to a bus 1112. Processor(s) 1102 include one or more processors or controllers that execute instructions stored in memory device(s) 1104 and/or mass storage device(s) 1108. Processor(s) 1102 may also include various types of computer-readable media, such as cache memory.

Memory device(s) 1104 include various computer-readable media, such as volatile memory (e.g., random access memory (RAM) 1114) and/or nonvolatile memory (e.g., read-only memory (ROM) 1116). Memory device(s) 1104 may also include rewritable ROM, such as Flash memory.

Mass storage device(s) 1108 include various computer readable media, such as magnetic tapes, magnetic disks, optical disks, solid-state memory (e.g., Flash memory), and so forth. As shown in FIG. 11, a particular mass storage device is a hard disk drive 1124. Various drives may also be included in mass storage device(s) 1108 to enable reading from and/or writing to the various computer readable media. Mass storage device(s) 1108 include removable media 1126 and/or non-removable media.

Input/output (I/O) device(s) 1102 include various devices that allow data and/or other information to be input to or retrieved from computing device 1100. Example VO device(s) 1102 include cursor control devices, keyboards, keypads, microphones, monitors or other display devices, speakers, printers, network interface cards, modems, and the like.

Display device 1130 includes any type of device capable of displaying information to one or more users of computing device 1100. Examples of display device 1130 include a monitor, display terminal, video projection device, and the like.

Interface(s) 1106 include various interfaces that allow computing device 1100 to interact with other systems, devices, or computing environments. Example interface(s) 1106 may include any number of different network interfaces 1120, such as interfaces to local area networks (LANs), wide area networks (WANs), wireless networks, and the Internet. Other interface(s) include user interface 1118 and peripheral device interface 1122. The interface(s) 1106 may also include one or more user interface elements 1118. The interface(s) 1106 may also include one or more peripheral interfaces such as interfaces for printers, pointing devices (mice, track pad, or any suitable user interface now known to those of ordinary skill in the field, or later discovered), keyboards, and the like.

Bus 1112 allows processor(s) 1102, memory device(s) 1104, interface(s) 1106, mass storage device(s) 1108, and I/O device(s) 1102 to communicate with one another, as well as other devices or components coupled to bus 1112. Bus 1112 represents one or more of several types of bus structures, such as a system bus, PCI bus, IEEE bus, USB bus, and so forth.

For purposes of illustration, programs and other executable program components are shown herein as discrete blocks, although it is understood that such programs and components may reside at various times in different storage components of computing device 1100 and are executed by processor(s) 1102. Alternatively, the systems and procedures described herein can be implemented in hardware, or a combination of hardware, software, and/or firmware. For example, one or more application specific integrated circuits (ASICs) can be programmed to carry out one or more of the systems and procedures described herein.

Further, where appropriate, functions described herein can be performed in one or more of: hardware, software, firmware, digital components, or analog components. For example, one or more application specific integrated circuits (ASICs) or field programmable gate arrays (FPGAs) can be programmed to carry out one or more of the systems and procedures described herein.

## Claims

1. A system comprising:
a first switch (T1) in a network topology;
a second switch (T2) in the network topology;
a host virtual machine having a communication link with each of the first switch (T1) and the second switch (T2); and
a routed peer link connecting the first switch (T1) to the second switch (T2);
wherein the first switch (T1) and the second switch (T2) have the same Internet protocol, IP, address and media access control, MAC, address such that a single virtual interface including the gateway IP address and the gateway MAC address is spread across both the first switch (T1) and the second switch (T2);
wherein the first switch (T1) further has a first IP address and a first MAC address and the second switch (T2) further has a second IP address and a second MAC address, the first IP address being different from the second IP address and the first MAC address being different from the second MAC address; and
wherein the first switch (T1) and the second switch (T2) are configured to signal, to the host virtual machine, a repair path including the first IP address and the second IP address for redirecting traffic when the communication link between the host virtual machine and either of the first switch (T1) or the second switch (T2) experiences a failure, the repair path including the routed peer link connecting the first switch (T1) to the second switch (T2).

2. The system of claim 1, wherein the first switch (T1) and the second switch (T2) are configured as a redundant anycast centralized gateway for the host virtual machine; and
wherein the first switch (T1) and the second switch (T2) are configured with a common Ethernet segment identifier, ESI, representing a main port on the host virtual machine.

3. The system of claim 1, wherein each of the first switch (T1) and the second switch (T2) is configured with an Ethernet virtual private network, EVPN, instance per virtual local area network, VLAN, with one or more of:
an automatically derived media access control-virtual routing and forwarding route target, MAC-VRF RT; or
a manually configured MAC-VRF RG.

4. The system of claim 1, wherein the routed peer link is a Layer-3 enabled peer link.

5. The system of claim 1, wherein the first switch (T1) is configured to advertise the first IP address as a next hop for the host virtual machine.

6. The system of claim 1, wherein the system is an Ethernet virtual private network, EVPN, using RT-1 protection signaling.

7. The system of claim 1, wherein the first switch (T1) and the second switch (T2) exchange a per-Ethernet segment identifier, ESI, route by way of the routed peer link to signal local ESI connectivity across a redundancy group formed by the first switch (T1) and the second switch (T2); and
wherein the per-ESI route is the repair path for use when a link between the host virtual machine and one of the first switch (T1) or the second switch (T2) has failed.

8. The system of claim 7, wherein the per-ESI route is transmitted between the first switch (T1) and the second switch (T2) as a Border Gateway Protocol, BGP, message.

9. The system of claim 1, wherein the first switch (T1) and the second switch (T2) are configured to sync an address resolution protocol, ARP, table by way of the routed peer link.

10. The system of claim 9, wherein the first switch (T1) comprises one or more processors configurable to execute instructions stored in non-transitory computer readable storage media, the instructions comprising:
receiving a message from the host virtual machine indicating that an update has been made to the ARP table; and
signaling the update to the second switch (T2) by way of a BGP message.

11. The system of claim 1, wherein the first switch (T1) and the second switch (T2) make up a redundancy group such that traffic flowing to or from the host virtual machine is load balanced across the first switch (T1) and the second switch (T2); and
wherein the traffic is load balanced by rerouting traffic across the routed peer link; and
wherein one or more of the first switch (T1) and the second switch (T2) are configured to advertise an Ethernet virtual private network, EVPN, MAC address to sync the redundancy group.

12. The system of claim 1, further comprising a link between the first switch (T1) and the host virtual machine, wherein the link terminates to a virtual local area network, VLAN, on the first switch (T1).

13. The system of claim 1, wherein the first switch (T1) and the second switch (T2) are configured to act as a virtual first hop gateway for the host virtual machine.

14. The system of claim 1, further comprising an Ethernet segment identifier, ESI, on the host virtual machine, wherein the first switch (T1) and the second switch (T2) have reachability to the ESI by way of the routed peer link; and
wherein the first switch (T1) is configured to transmit a Border Gateway Protocol, BGP, message to the second switch (T2) indicating that the second switch (T2) has reachability to the ESI by way of a next hop thru the first switch (T1).

15. The system of claim 1, wherein the first switch (T1) is configured to automatically transmit a Border Gateway Protocol, BGP, message to the second switch (T2) by way of the routed peer link in response to the first switch, T1, learning of an update to an address resolution protocol, ARP, table on the host virtual machine.

## Patentansprüche

1. System umfassend:
einen ersten Switch (T1) in einer Netzwerktopologie;
einen zweiten Switch (T2) in der Netzwerktopologie;
eine virtuelle Host-Maschine, die einen Kommunikationslink mit jedem aus dem ersten Switch (T1) und dem zweiten Switch (T2) hat; und
einen gerouteten Peer-Link, der den ersten Switch (T1) mit dem zweiten Switch (T2) verbindet;
wobei der erste Switch (T1) und der zweite Switch (T2) die gleiche Internetprotokoll-, IP-, Adresse und Media-Access-Control-, MAC-, Adresse haben, so dass eine einzige virtuelle Schnittstelle, die die Gateway-IP-Adresse und die Gateway-MAC-Adresse enthält, über sowohl den ersten Switch (T1) als auch den zweiten Switch (T2) verteilt ist;
wobei der erste Switch (T1) ferner eine erste IP-Adresse und eine erste MAC-Adresse hat und der zweite Switch (T2) ferner eine zweite IP-Adresse und eine zweite MAC-Adresse hat, wobei die erste IP-Adresse verschieden von der zweiten IP-Adresse ist und die erste MAC-Adresse verschieden von der zweiten MAC-Adresse ist; und
wobei der erste Switch (T1) und der zweite Switch (T2) konfiguriert sind, zum Signalisieren an die virtuelle Host-Maschine, eines Reparaturpfads, der die erste IP-Adresse und die zweite IP-Adresse enthält, zum Umleiten von Verkehr, wenn der Kommunikationslink zwischen der virtuellen Host-Maschine und entweder dem ersten Switch (T1) oder dem zweiten Switch (T2) einen Fehler erfährt, wobei der Reparaturpfad den gerouteten Peer-Link enthält, der den ersten Switch (T1) mit dem zweiten Switch (T2) verbindet.

2. System nach Anspruch 1, wobei der erste Switch (T1) und der zweite Switch (T2) konfiguriert sind als ein redundantes Anycast-zentralisiertes Gateway für die virtuelle Host-Maschine; und
wobei der erste Switch (T1) und der zweite Switch (T2) konfiguriert sind mit einem gemeinsamen Ethernet-Segment-Identifikator, ESI, der einen Hauptport auf der virtuellen Host-Maschine darstellt.

3. System nach Anspruch 1, wobei jeder aus dem ersten Switch (T1) und dem zweiten Switch (T2) konfiguriert ist mit einer Ethernet-Virtual-Private-Network-, EVPN-, Instanz pro Virtual-Local-Area-Network, VLAN, mit einem oder mehreren aus:
einem automatisch abgeleiteten Media-Access-Control-Virtual-Routing-and-Forwarding-Routenziel, MAC-VRF RT; oder
einem manuell konfigurierten MAC-VRF RG.

4. System nach Anspruch 1, wobei der geroutete Peer-Link ein Layer-3-fähiger Peer-Link ist.

5. System nach Anspruch 1, wobei der erste Switch (T1) konfiguriert ist zum Ankündigen der ersten IP-Adresse als einen nächsten Hop für die virtuelle Host-Maschine.

6. System nach Anspruch 1, wobei das System ein Ethernet-Virtual-Private-Network, EVPN, ist, das RT-1-Schutzsignalisierung verwendet.

7. System nach Anspruch 1, wobei der erste Switch (T1) und der zweite Switch (T2) eine pro-Ethernet-Segment-Identifikator-, ESI-, Route austauschen über den gerouteten Peer-Link, zum Signalisieren von lokaler ESI-Konnektivität über eine Redundanzgruppe, die durch den ersten Switch (T1) und den zweiten Switch (T2) gebildet ist; und
wobei die pro-ESI-Route der Reparaturpfad zur Verwendung ist, wenn ein Link zwischen der virtuellen Host-Maschine und einem aus dem ersten Switch (T1) oder dem zweiten Switch (T2) fehlgeschlagen ist.

8. System nach Anspruch 7, wobei die pro-ESI-Route zwischen dem ersten Switch (T1) und dem zweiten Switch (T2) als eine Border-Gateway-Protokoll-, BGP-, Nachricht übertragen wird.

9. System nach Anspruch 1, wobei der erste Switch (T1) und der zweite Switch (T2) konfiguriert sind zum Synchronisieren einer Address-Resolution-Protocol-, ARP-, Tabelle über den gerouteten Peer-Link.

10. System nach Anspruch 9, wobei der erste Switch (T1) einen oder mehrere Prozessoren umfasst, die konfigurierbar sind zum Ausführen von Anweisungen, die auf nichttransitorischen computerlesbaren Speichermedien gespeichert sind, wobei die Anweisungen umfassen:
Empfangen einer Nachricht von der virtuellen Host-Maschine, die anzeigt, dass eine Aktualisierung an der ARP-Tabelle vorgenommen wurde; und
Signalisieren der Aktualisierung an den zweiten Switch (T2) über eine BGP-Nachricht.

11. System nach Anspruch 1, wobei der erste Switch (T1) und der zweite Switch (T2) eine Redundanzgruppe bilden, so dass Verkehr, der zu oder von der virtuellen Host-Maschine fließt, über den ersten Switch (T1) und den zweiten Switch (T2) lastverteilt wird; und
wobei der Verkehr lastverteilt wird durch Umleiten von Verkehr über den gerouteten Peer-Link; und
wobei einer oder mehrere aus dem ersten Switch (T1) und dem zweiten Switch (T2) konfiguriert sind zum Ankündigen einer Ethernet-Virtual-Private-Network-, EVPN-, MAC-Adresse, zum Synchronisieren der Redundanzgruppe.

12. System nach Anspruch 1, ferner umfassend einen Link zwischen dem ersten Switch (T1) und der virtuellen Host-Maschine, wobei der Link an einem Virtual-Local-Area-Network, VLAN, auf dem ersten Switch (T1) terminiert.

13. System nach Anspruch 1, wobei der erste Switch (T1) und der zweite Switch (T2) konfiguriert sind zum Agieren als ein virtuelles First-Hop-Gateway für die virtuelle Host-Maschine.

14. System nach Anspruch 1, ferner umfassend einen Ethernet-Segment-Identifikator, ESI, auf der virtuellen Host-Maschine, wobei der erste Switch (T1) und der zweite Switch (T2) Erreichbarkeit zu dem ESI über den gerouteten Peer-Link haben; und
wobei der erste Switch (T1) konfiguriert ist zum Übertragen einer Border-Gateway-Protokoll-, BGP-, Nachricht an den zweiten Switch (T2), die anzeigt, dass der zweite Switch (T2) Erreichbarkeit zu dem ESI über einen nächsten Hop durch den ersten Switch (T1) hat.

15. System nach Anspruch 1, wobei der erste Switch (T1) konfiguriert ist zum automatischen Übertragen einer Border-Gateway-Protokoll-, BGP-, Nachricht an den zweiten Switch (T2) über den gerouteten Peer-Link, als Antwort auf Erfahren, durch den ersten Switch, T1, von einer Aktualisierung an einer Address-Resolution-Protocol-, ARP-, Tabelle auf der virtuellen Host-Maschine.

## Revendications

1. Un système comprenant :
un premier commutateur (T1) dans une topologie de réseau ;
un deuxième commutateur (T2) dans la topologie de réseau ;
une machine virtuelle hôte, disposant d'une liaison de communication avec chacun parmi le premier commutateur (T1) et le deuxième commutateur (T2) ; et
une liaison entre homologues routée, reliant le premier commutateur (T1) au deuxième commutateur (T2) ;
le premier commutateur (T1) et le deuxième commutateur (T2) ont la même adresse de Protocole Internet (IP, pour "*Internet Protocol*") et la même adresse de commande d'accès au support (MAC, pour "*Media Access Control*"), de sorte qu'une interface virtuelle unique comprenant l'adresse IP de la passerelle et l'adresse MAC de la passerelle s'étend à la fois sur le premier commutateur (T1) et le deuxième commutateur (T2) ;
le premier commutateur (T1) possède en outre une première adresse IP et une première adresse MAC, et le deuxième commutateur (T2) possède en outre une deuxième adresse IP et une deuxième adresse MAC, la première adresse IP étant différente de la deuxième adresse IP et la première adresse MAC étant différente de la deuxième adresse MAC ; et
le premier commutateur (T1) et le deuxième commutateur (T2) sont configurés pour signaler à la machine virtuelle hôte un chemin de réparation comprenant la première adresse IP et la deuxième adresse IP pour rediriger le trafic lorsque la liaison de communication entre la machine virtuelle hôte et l'un ou l'autre parmi le premier commutateur (T1) et le deuxième commutateur (T2) subit une défaillance, le chemin de réparation comprenant la liaison entre homologues routée, reliant le premier commutateur (T1) au deuxième commutateur (T2).

2. Le système selon la revendication 1, dans lequel le premier commutateur (T1) et le deuxième commutateur (T2) sont configurés sous la forme d'une passerelle centralisée anycast redondante pour la machine virtuelle hôte ; et
dans lequel le premier commutateur (T1) et le deuxième commutateur (T2) sont configurés avec un identifiant de segment Ethernet commun (ESI, pour "*Ethernet segment identifier*") représentant un port principal sur la machine virtuelle hôte.

3. Le système selon la revendication 1, dans lequel chacun parmi le premier commutateur (T1) et le deuxième commutateur (T2) est configuré avec une instance de réseau privé virtuel Ethernet (EVPN, pour "*Ethernet Virtual Private Network*") par réseau local virtuel (VLAN, pour "*Virtual Local Area Network*"), comprenant un ou plusieurs parmi :
une cible de routage et de transfert virtuel de contrôle d'accès au support (MAC-VRF RT, pour "*media access control-virtual routing and forwarding route target*") dérivée automatiquement ; ou
une MAC-VRF RG configurée manuellement.

4. Le système selon la revendication 1, dans lequel la liaison entre homologues routée est une liaison entre homologues activée en couche 3.

5. Le système selon la revendication 1, dans lequel le premier commutateur (T1) est configuré pour annoncer la première adresse IP comme saut suivant pour la machine virtuelle hôte.

6. Le système selon la revendication 1, dans lequel le système est un réseau privé virtuel Ethernet (EVPN) utilisant la signalisation de protection RT-1.

7. Le système selon la revendication 1, dans lequel le premier commutateur (T1) et le deuxième commutateur (T2) échangent une route d'identificateur de segment par Ethernet, ESI, via la liaison entre homologues routée afin de signaler la connectivité ESI locale à travers un groupe de redondance formé par le premier commutateur (T1) et le deuxième commutateur (T2) ; et
dans lequel la route par ESI est le chemin de réparation à utiliser lorsqu'une liaison entre la machine virtuelle hôte et l'un des premier commutateur (T1) ou deuxième commutateur (T2) est défaillante.

8. Le système selon la revendication 7, dans lequel la route par ESI est transmise entre le premier commutateur (T1) et le deuxième commutateur (T2) sous la forme d'un message de protocole de passerelle de frontière (BGP, pour "*Border Gateway Protocol*").

9. Le système selon la revendication 1, dans lequel le premier commutateur (T1) et le deuxième commutateur (T2) sont configurés pour synchroniser une table de protocole de résolution d'adresse (ARP, pour "*Address Resolution Protocol*") par l'intermédiaire de la liaison entre homologues routée.

10. Le système selon la revendication 9, dans lequel le premier commutateur (T1) comprend un ou plusieurs processeurs configurables pour exécuter des instructions stockées dans un support de stockage non transitoire lisible par ordinateur, les instructions comprenant :
le fait de recevoir un message provenant de la machine virtuelle hôte indiquant qu'une mise à jour a été effectuée sur la table ARP ; et
le fait de signaler la mise à jour au deuxième commutateur (T2) au moyen d'un message BGP.

11. Le système selon la revendication 1, dans lequel le premier commutateur (T1) et le deuxième commutateur (T2) forment un groupe de redondance de telle sorte que le trafic circulant vers ou depuis la machine virtuelle hôte soit équilibré entre le premier commutateur (T1) et le deuxième commutateur (T2) ; et
dans lequel le trafic est réparti par réacheminement du trafic sur la liaison entre homologues routée ; et
dans lequel un ou plusieurs parmi le premier commutateur (T1) et le deuxième commutateur (T2) sont configurés pour annoncer une adresse MAC de réseau privé virtuel Ethernet (EVPN) afin de synchroniser le groupe de redondance.

12. Le système selon la revendication 1, comprenant en outre une liaison entre le premier commutateur (T1) et la machine virtuelle hôte, dans lequel la liaison aboutit à un réseau local virtuel (VLAN) sur le premier commutateur (T1).

13. Le système selon la revendication 1, dans lequel le premier commutateur (T1) et le deuxième commutateur (T2) sont configurés pour agir en tant que passerelle virtuelle de premier saut pour la machine virtuelle hôte.

14. Le système selon la revendication 1, comprenant en outre un identifiant de segment Ethernet, ESI, sur la machine virtuelle hôte, le premier commutateur (T1) et le deuxième commutateur (T2) ayant une accessibilité à l'ESI par l'intermédiaire de la liaison entre homologues routée ; et
dans lequel le premier commutateur (T1) est configuré pour transmettre un message de protocole de passerelle de frontière, BGP, au deuxième commutateur (T2) indiquant que le deuxième commutateur (T2) est accessible à l'ESI par l'intermédiaire d'un saut suivant via le premier commutateur (T1).

15. Le système selon la revendication 1, dans lequel le premier commutateur (T1) est configuré pour transmettre automatiquement un message de protocole de passerelle de frontière, BGP, au deuxième commutateur (T2) via la liaison entre homologues routée en réponse à la détection par le premier commutateur (T1) d'une mise à jour de la table de protocole de résolution d'adresse, ARP, sur la machine virtuelle hôte.
